# EUROPEAN PATENT SPECIFICATION

(11) **EP 3 248 518 B1**
(45) Date of publication and mention of the grant of the patent: **29.09.2021**
(21) Application number: 17168165.3
(22) Date of filing: 26.04.2017
(51) Int. Cl.: A47J 31/36

(54) **DEVICE FOR ORIENTING INFUSION CAPSULES**
VORRICHTUNG ZUM AUSRICHTEN VON BRÜHKAPSELN
DISPOSITIF D'ORIENTATION DE CAPSULES D'INFUSION

(30) Priority: 27.04.2016 IT UA20162933
(43) Date of publication of application: 29.11.2017
(73) Proprietor: Fas International S.r.l., 36015 Schio (VI) (IT)
(72) Inventor: MORABITO, Giuseppe, 36014 Santorso (VI) (IT)
(74) Representative: Perani & Partners S.p.A.

(56) References cited:
- EP-A1- 1 571 951
- EP-A2- 1 797 800
- EP-B1- 1 571 951

## Description

The present invention relates to a device for orienting infusion capsules, i.e. capsules for use in the preparation of beverages such as coffee, tea, flavored beverages and others. The device usefully finds application in vending machines for infusion beverage vending machines, such as, for example, coffee vending machines as used in offices, factories, hospitals, public or private areas and others.

Beverages are currently known to be prepared in vending machines from capsules containing infusion material therein. These capsules comprise a main body having a substantially cylindrical or frustoconical shape, with a flange at one of the bases. If the capsule has a frustoconical shape, the flange is located at the larger base.

The capsules are stored in bulk in a reservoir in the machine. When beverages have to be prepared, capsules must be withdrawn from the tank and transferred to an infuser. More particularly, for this operation to take place, the capsules must be disposed with a predetermined orientation in space. More in detail, the capsules are withdrawn from the reservoir in which they are stored with a bulk orientation and are transferred to the infuser with a predetermined orientation.

Therefore, a device for orienting infusion capsules is known in the art. Such device comprises a reservoir in which the aforementioned capsules are stored in bulk. The reservoir has a base having one or more openings, for the passage of capsules by gravity.

A rotating drum is placed below the reservoir. Such drum has a vertically extending axis of rotation and a plurality of seats arranged in a peripheral area. As the seats move proximate to the opening, they may receive the capsules from the reservoir. Since the shape of the seats mates that of the main body of the capsules, the latter may
only fall therein with a predetermined orientation, i.e. with the main body fitting in the seat at the bottom and with the flange contacting the drum. If the capsules have any orientation other than this, they are not withdrawn from the reservoir, but the interference between the drum and the capsule, namely the interference between the seat and the flange causes the capsule to randomly rotate. Such rotation, induced by the movement of the drum, will continue until the capsule assumes the predetermined orientation and is withdrawn from the reservoir, thereby allowing the next capsule to contact the drum.

Once the capsules are withdrawn, the drum transfers them to a pick-up station, in which they are pulled out of the seats and transferred to the infuser.

Another example of a device for orienting infusion capsules is reported by document EP1797800A2. In particular, the orienting device comprises a wall that is displaceable in a substantially vertical direction and comprises on or more guides that are adapted to receive capsules with a particular orientation.

### SUMMARY OF THE INVENTION

One drawback of the above described arrangement is that it requires a rotating drum. Therefore, the dimensions of the device, namely its width and depth, will be defined by the dimensions of the drum. For the system to operate as designed, the drum must meet a minimum-diameter requirement, and particularly have a diameter that is not smaller than 190 mm. Dimensional issues can be found also in the document EP1797800A2. In other words, the dimensions of the prior art device cannot be reduced beyond a certain limit.

Therefore, the technical purpose of the present invention is to provide a device for orienting infusion capsules that can overcome the above mentioned prior art drawbacks.

Particularly, one object of the present invention is to provide a device for orienting infusion capsules that can afford a considerable reduction of dimensions.

The aforementioned technical purpose and objects are substantially fulfilled by a device for orienting infusion capsules that comprises the technical features as disclosed in one or more of the accompanying claims.

Particularly, a device for orienting infusion capsules of the present invention comprises a reservoir for infusion capsules. The reservoir has an exit opening for the capsules. The opening is configured to allow the capsules to exit with one or more predetermined orientations. The reservoir also has a bottom wall that is at least partially inclined toward the opening.

Furthermore, the device comprises a shaft that is at least partially inserted in the reservoir and has a lateral surface. The device comprises means for moving the shaft.

An interference member is located on the lateral surface of the shaft and projects out of the outer surface to be moved by the shaft and create an interference with a flange of a capsule to rotate such capsule.

An abutment wall is located opposite to the shaft and is associated with the shaft to abut a base or a cover of the capsules. Thus, the capsules will be locked in one or more predetermined orientations.

The above discussed device solves the technical problem, as the rotational movement of the shaft causes the interference member to contact the flange. Therefore, this interference member imparts rotary motion to the capsule through the flange. Such rotary motion continues until the flange is properly oriented and, as a result, can pass through the opening and exit the reservoir.

This type of device has dimensions that can be much smaller than the prior art device. Furthermore, no limit is imposed to further reduction of dimensions, as no rotating drum is required.

### LIST OF DRAWINGS

Further features and advantages of the present invention will result more clearly from the illustrative, non-limiting description of a preferred, non-exclusive embodiment of a device for orienting infusion capsules as shown in the annexed drawings, in which:
- Figure 1 is a partially sectional perspective view of a device for orienting infusion capsules according to the present invention;
- Figure 2 is a sectional side view of the device of Figure 1;
- Figure 3 is a top view of the device of Figures 1 and 2; and
- Figure 4 is a sectional front view, as taken along the plane D-D of Figure 3;
- Figure 5 is a sectional front view as taken along the plane G-G of Figure 3;
- Figure 6 is a sectional side view of the device of Figures 1 and 2;

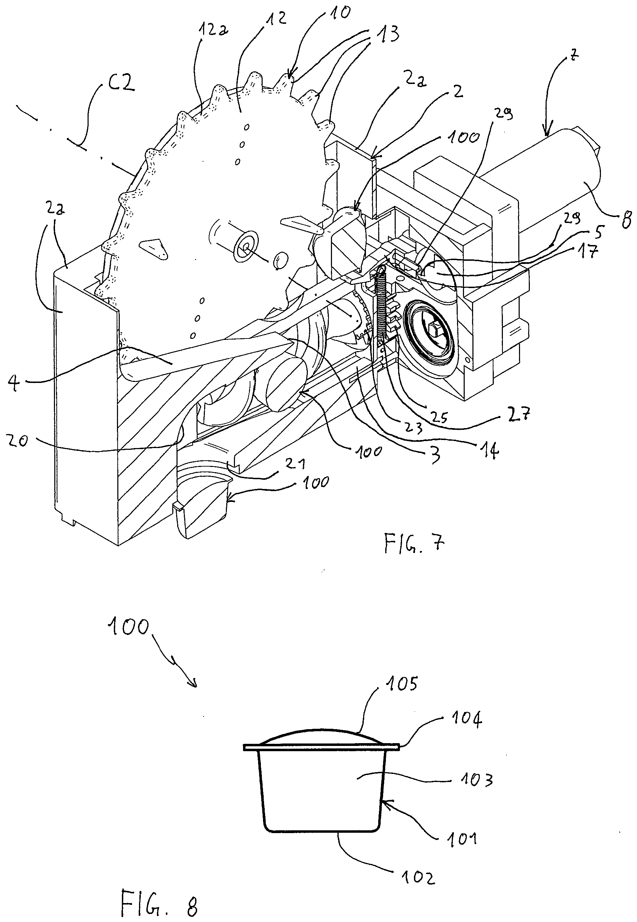

- Figure 7 is a partially sectional perspective view of the device of Figures 1 and 2; and
- Figure 8 is a schematic side view of an infusion capsule.

### DETAILED DESCRIPTION

Referring to the annexed figures, numeral 1 generally designates a device for orienting infusion capsules 100 of the present invention. The capsules 100, that are not part of the present invention, will be briefly described to more clearly illustrate the operation of the device 1.

An infusion capsule 100 comprises a main body 101 having a cylindrical or frustoconical shape. The main body 101 has the purpose of containing the infusion material, which may be, for instance, coffee, tea or other infusion material known to those of skill in the art.

More in detail, the main body 101 has a base 102 and a side wall 103. If the capsule 100 has a frustoconical shape, the side wall 103 slightly converges toward the base 102.

A flange 104 is connected to the main body 101 in a position opposite to the base 102. This flange 104 is particularly disposed on a plane that is substantially parallel to the base 102. A cover 105 closes the capsule 100 at the flange 104 and may have a convex shape.

As used herein and described above, the "width" of the capsule 100 is intended as the maximum dimension of the capsule, which is particularly defined by its diameter at the flange 104. Likewise, the "height" of the capsule 100 is intended as the dimension of the capsule 100 along a direction perpendicular to the flange 104, particularly defined by the distance between the base 102 of the main body 1 and the top of the cover 105.

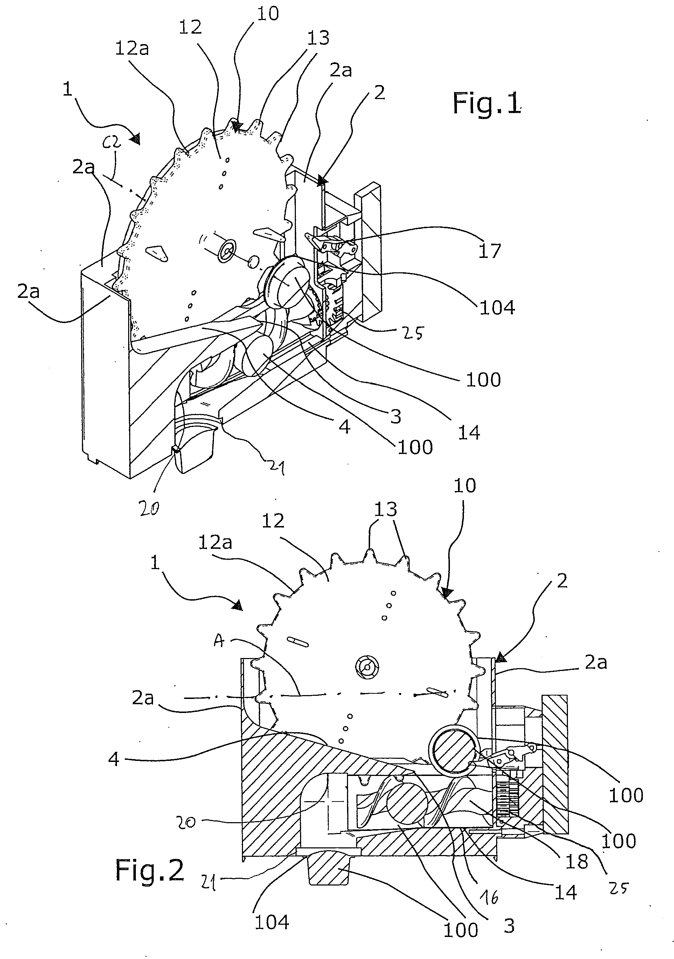

Particularly referring to Figure 1, the device 1 comprises a reservoir 2 for the capsules 100. The reservoir 2 may have any shape whatever. Particularly, the reservoir 2 is externally delimited by four side walls 2a. Optionally, a cover (not shown) may be placed on the reservoir 2 to close it at its top. Such cover may be removed to introduce the capsules 100 into the reservoir 2 and later placed back in its position.

As shown in Figure 2, the reservoir 2 has an exit opening 3 for the capsules 100. Such opening 3 is located in a lower area of the reservoir 2, for the capsules 100 to be able to come out of the reservoir 2 by gravity. The opening 3 is configured to allow the capsules to exit with one or more predetermined orientations.

It shall be noted that the opening 3 has a width that is substantially equal to a height of the capsules 100 to allow the capsules 100 to pass in one or more orientations that the flange 104 takes, substantially vertical and perpendicular to a short side of the opening 3.

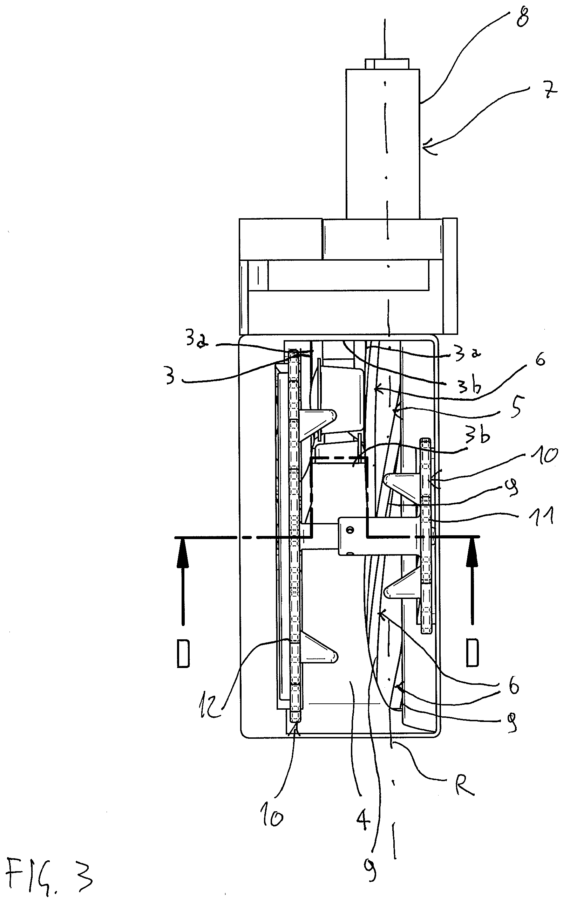

More in detail, the opening 3 has a substantially rectangular shape. A pair of first edges 3a of the opening 3 are disposed in a longitudinal direction of extension "A" of the reservoir 2. A pair of second edges 3b is disposed transverse, particularly perpendicular to the first edges 3a. It shall be noted that, as particularly shown in Figure 3, the distance between the second edges 3b is greater than the width of the capsule 100. Conversely, the distance between the first edges 3a has an intermediate value between the height and the width of the capsule 100 and is particularly slightly greater than the height of the capsule 100. By way of example, the distance between the first edges 3a is 27 mm when the height of the capsule is 26 mm. Therefore, the first edges 3a of the opening 3 define a long side of the opening 3, whereas the second edges 3b define a short side.

Advantageously, the opening 3 selects one or more predetermined orientations of the capsule 100. More in detail, in the preferred embodiment, the capsule 100 may pass through the opening 100 with two distinct orientations. In both orientations, the flange 104 is disposed on a vertical plane and is proximate to one of the first edges 3a of the opening 3. The selection of a single orientation of the capsules 100 is carried out by parts of the device 1 that are located downstream from the opening 3 and will be discussed in a subsequent part of the present disclosure.

In order to move the capsules 100 toward the opening 3, the reservoir 2 has a bottom wall 4. Such bottom wall 4 is at last partially inclined toward the opening 3, such that the capsules 100 are conveyed toward the opening 3. As shown in Figure 2, the bottom wall 4 is inclined from a side wall 2a of the reservoir 2 toward the opening 3, such that the capsules 100 will be conveyed substantially along the longitudinal direction of extension "A". Particularly, the bottom wall 4 is at least partially delimited by one of the second edges 3b of the opening 3.

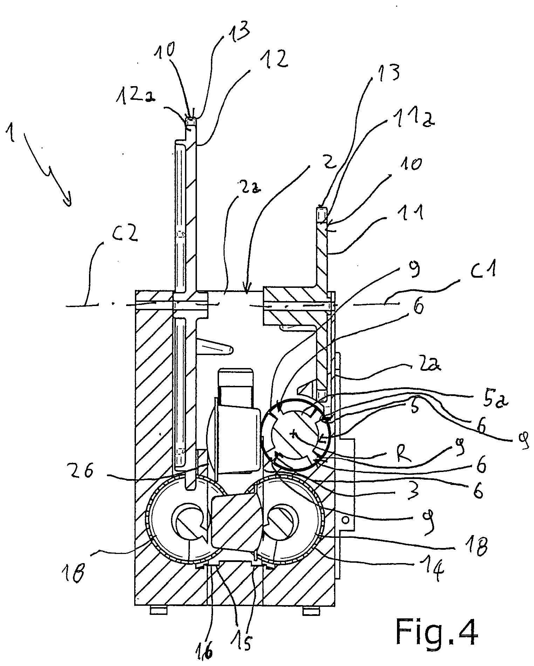

In order to change the orientation of the capsules 100, the device 1 is equipped with a shaft 5. Such shaft 5 is at least partially inserted in the reservoir 2, such that it can act upon the capsules 100 contained therein. Particularly, the shaft 5 has an axis of rotation "R" oriented substantially parallel to the longitudinal direction of extension "A" of the reservoir 2. In other words, the shaft 5 is oriented substantially parallel to the first edges 3a of the opening 3. Particularly referring to Figure 4, it shall be noted that the shaft 5 is located in a proximal area with respect to one of the walls 2a of the reservoir 2, such that it will not block the opening 3. More in detail, the shaft 5 has a substantially cylindrical lateral surface 5a. An interference member 6 is located on the side surface 5a and projects out of the lateral surface 5a toward the interior of the reservoir 2. Therefore, the interference member 6 is moved by the rotation of the shaft 5 and creates an interference with the flanges 104 of the capsules 100 stored in the reservoir 2. Such interference causes the capsules 100 to be rotated in random fashion.

As shown for instance in Figure 3, the device 1 comprises drive means 7 for driving the shaft 5. By way of example, these drive means 7 may comprise an electric motor 8, which is connected to the shaft 5 to rotate it about its own axis of rotation "R". The electric motor 8 is known in the art and will not be further described herein.

In the preferred embodiment of the invention, the interference member 6 comprises a rib 9 which at least partially extends in a direction parallel to the axis of rotation "R" of the shaft 5. Such rib 9 extends at least partially along the length of the shaft 5 and preferably along the entire section of the shaft 5 that is inserted in the reservoir 2. Preferably, the rib 9 extends continuously along the shaft 5. Nevertheless, alternative embodiments of the invention, not shown, may be provided, in which the rib 9 extends in discontinuous or broken fashion along the shaft 5. More in detail, in the preferred embodiment, the rib 9 has a substantially helical extension, and wraps around the axis of rotation "R" of the shaft 5. In an alternative embodiment, not shown, the rib 9 may extend in any manner whatever along the shaft 6, e.g in straight fashion.

Particularly referring to Figure 4, the rib 9 has a radial extent that is dimensionally equal to a width of the flange 104 to engage such flange 104 and impart a rotation to the capsule 100. In any case, the rotation of the capsule 100 may be also obtained by the interference of the rib 9 with the main body 101 of the capsule 100. More in detail, the rib 9 has a radial extent that ranges from 2 mm to 10 mm, preferably of 5 mm. As shown for instance in Figure 4, the device 1 may comprise a plurality of interference members 6 and, as a result, a plurality of ribs 9. These ribs 9 are angularly equally spaced on the lateral surface 5a of the shaft 5 relative to the axis of rotation "R".

Referring to Figure 4, the device 1 comprises an abutment wall 26 opposite to the shaft 5 and associated therewith to abut the base 102 or the cover 105 of the capsules 100, to thereby lock them in one or more predetermined orientations. Particularly, the abutment wall 26 has a minimum distance from the interference member 6 that is greater than the height of the capsules 100 and smaller than the width of the capsules 100. More in detail, the minimum distance will be slightly greater than the height of the capsules 100, to thereby prevent any further rotation of the capsules 100 once they have assumed the proper orientation.

In order to assist the movement of the capsules 100, the device 1 may optionally comprise stirring means 10 within the reservoir 2. These stirring means 10 have the purpose of mixing the capsules 100 in the reservoir 2. Advantageously, the stirring means 10 ensure that the weight of the capsules 100 located at the top will not prevent the shaft 5 from rotating the capsules 100 that it contacts through the interference member 6.

More in detail, the stirring means 10 comprise at last one wheel 11, 12 having an outside perimeter 11a, 12a. Such wheel 11, 12 is oriented parallel to the axis of rotation "R" of the shaft 5 and has a center axis "C1", "C2" oriented transverse, preferably perpendicular to the axis of rotation "R" of the shaft 5. The wheel 11, 12 has a plurality of teeth 13 arrange along its outside perimeter 11a, 12a. These teeth 13 are preferably angularly equally spaced along the perimeter 11a, 12a of the wheel 11, 12.

With additional detail, the device 1 comprises a pair of wheels 11, 12. These wheels 11, 12 are rotatably connected to a respective wall 2a of the reservoir 2. The walls 2a of the reservoir 2 which support the wheels 11, 12 are opposite to each other, and oriented parallel to the axis of rotation "R" of the shaft 5.

More in detail, the device 1 comprises first 1 and second 12 wheels. The first wheel 11 is smaller than the second wheel 12, but operates in a similar manner on the capsules 100 through the teeth 13.

Advantageously, both wheels 11, 12 are rotated by the drive means 7 that operate on the shaft 5. The movement of the wheels 11, 12 will be discussed in greater detail in a subsequent part of the present disclosure.

The stirring means 10 also comprise a pushing member 17 on a wall 2a of the reservoir 2, which is configured to impart an impulsive motion to the capsules 100. Such pushing member 17 is located above the opening 3 at a certain distance therefrom, such that it will maintain the area of the reservoir 2 above the opening 3 free of capsules 100. Thus, the capsules 100 that slip from the bottom wall 4 toward the opening 3 will not be hindered by the weight of any other capsules 100 in that area. More in detail, the pushing member 17 is accompanied upwards by the aforementioned drive means 7 for the shaft 5 and is returned downwards by a spring 27. Further details about the movement of the pushing member 17 will be provided in a subsequent part of the present disclosure..

Particularly referring to Figure 1, the device 1 comprises a conduit 14 along which the capsules 100 move. Such conduit is located below the reservoir 2. The conduit 14 is also in communication with the reservoir 2 through the aforementioned opening 3. In other words, the capsules 100 enter the conduit 14 from the reservoir 2 through the opening 3. The conduit has a lower surface 16 upon which the capsules 100, namely their flanges 104, rest.

More in detail, the device 1 comprises a pair of guides 15 located within the conduit 14. These guides 15 are located on the lower surface, and are configured to engage the flange 104 of each capsule 100. The guides 15 are preferably straight, are arranged in a direction substantially parallel to the shaft 5 and extend along the entire length of the conduit 14. Particularly referring to Figure 4, it shall be noted that, depending on the direction of orientation of the flanges 104 of the capsules that exit the opening 3, such flanges fit in one or the other of the guides 15.

The device 1 further comprises at least one auger 18 located in the conduit 14. The auger 18 is configured to engage the capsule 100 and move it along the conduit 14. For this purpose, the auger 18 has a pitch whose dimensions are similar to the width of the capsule 100.

More in detail, the device 1 comprises a pair of counter-rotating augers 18. As shown in Figure 4, the augers 18 are oriented parallel to the axis of rotation "R" of the shaft 5 such that their rotation will push the capsules 100 along the conduit 14.

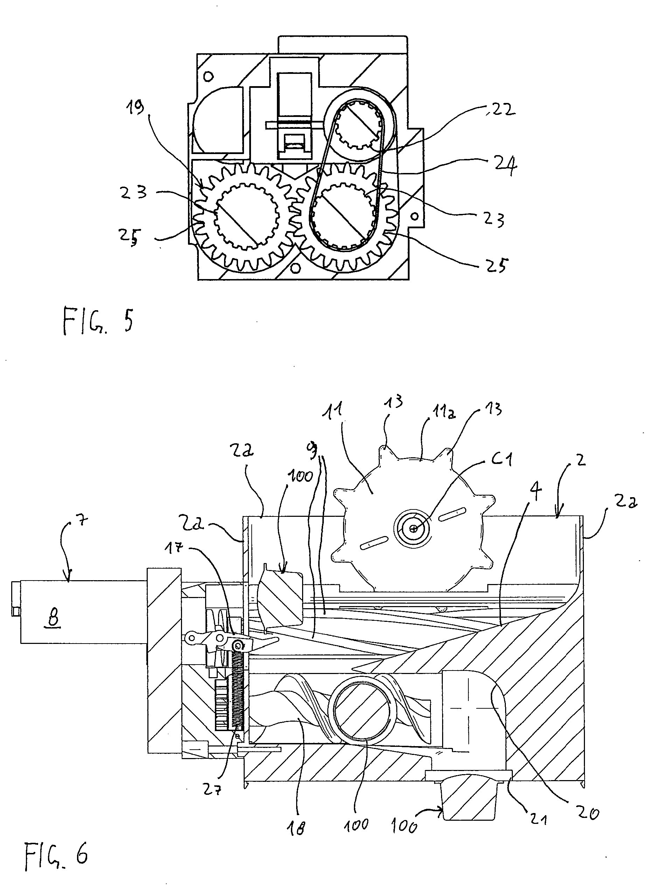

In a particularly advantageous arrangement, the device 1 comprises transmission means 19 between the drive means 7 for driving the shaft 5 and the auger 18. These transmission means 19 comprise a pinion 22 connected to the shaft 5. Each auger 18 is connected to a respective gear 23. One of the gears 23 of the augers 18 is connected to the pinion 22 by a transmission belt 24. Particularly, the belt 24 meshes with the gear 23 that is closest to the pinion 22, as shown for instance in Figure 5. One pair of additional gears 25 are connected to the gears 23, such that they will be disposed coaxial therewith and with the respective augers 18. The additional gears 25 mesh with each other, to allow motion to be transferred from the gear 23 connected to the pinion 22 to both augers 18. It shall be noted that, in a highly advantageous arrangement, the motor 8 may be directly connected to one of the two augers 18, i.e. one of the two gears 23. With the above discussed mechanism, the rotation of the motor 8 rotates the gear 23, the additional gear 25 and, as a result, the auger 18 connected thereto. The additional gear 25 transfers motion to the other auger 18. The belt 24 transfers motion from the gear 23 with which the pinion 22 meshes. The wheel 12 is moved by one of the two augers 18, whereas the wheel 11, coaxially connected with the wheel 12, is rotated thereby.

More in detail, it shall be noted that the pushing member 17 is accompanied upwards by a tooth 28 which is attached to a peripheral area of the shaft 5 and periodically engages a pin 29 that is fixed to the pushing member 167 as shown for instance in Figure 6. When, as a result of the continuous rotation of the shaft 5, the tooth 28 releases the pin 29, the aforementioned spring 27 returns the pushing member 17 downwards with an impulsive motion, and imparts a thrust to any capsule 100 thereunder. As mentioned above, the capsules 100 may have two distinct orientations within the conduit 14. In order to rotate them to a single predetermined final orientation, the device 1 comprises a curved wall 20 located in an end area of the conduit 14. The curved wall 20 engages the flanges 104 of the capsules 100 and, according to their orientation, rotates them in a clockwise or counterclockwise direction, as they are being fed along the conduit 14. Particularly referring to Figure 4, a capsule 100 with the flange 104 fitted in the rightmost guide 15 will be rotated 90° counterclockwise. A capsule 100 with the flange 104 fitted in the leftmost guide 15 will be rotated 90° counterclockwise. As a result, the capsules 100 reach the end area of the conduit 14 with a single predetermined final orientation, in which the flange 104 is disposed with a substantially horizontal orientation above the main body 101 of the capsule 100. Then, the capsule 100 comes out of an exit 21 of the conduit 14. Such exit 21 is configured to allow the capsule 100 to pass only in the predetermined final orientation.

## Claims

1. A device (1) for orienting infusion capsules (100) comprising a reservoir (2) for infusion capsules (100), said reservoir (2) having an exit opening (3) for said capsules (100), said reservoir (2) having a bottom wall (4) at least partially inclined toward said opening (3), said opening (3) being configured to allow said capsules (100) to exit in one or more predetermined orientations; **characterized in that** said device (1) further comprising a shaft (5), at least partially inserted in said reservoir (2) and having a lateral surface (5a);
drive means (7) for driving said shaft (5), to set said shaft (5) into rotation about an axis of rotation (R) thereof; an interference member (6) located on said lateral surface (5a) and projecting out of said lateral surface (5a) such that it may be moved by said shaft (5) and create an interference with a flange (104) of a capsule (100) to rotate said capsule (100); an abutment wall (26) opposite to said shaft (5) and associated with said shaft (5) to abut a base (102) or a cover (105) of said capsule (100) for said capsule (100) to be locked in one or more predetermined orientations.

2. A device (1) as claimed in the preceding claim, **characterized in that** said interference member (6) is configured to create an interference with a flange (104) of said capsule (100) to rotate said capsule (100) and bring a base (102) or a cover (105) of said capsule to abutment against said abutment wall (26), to thereby lock said capsule in one or more predetermined orientations.

3. A device (1) as claimed in any of the preceding claims, **characterized in that** said abutment wall (26) has a minimum distance from said interference member (6) that is greater than a height of said capsules (100) and smaller than a width of said capsules (100).

4. A device (1) as claimed in any of the preceding claims, **characterized in that** said opening (3) has a width that is substantially equal to a height of said capsules (100) to allow said capsules (100) to pass in one or more orientations that said flange (104) takes, substantially vertical and perpendicular to a short side of said opening (3).

5. A device (1) as claimed in any of the preceding claims, **characterized in that** said interference member (6) comprises a rib (9) that extends parallel to the axis of rotation (R) of said shaft (5).

6. A device (1) as claimed in the preceding claim, **characterized in that** said rib (9) extends along substantially the entire portion of said shaft (5) that is inserted in said reservoir (2).

7. A device (1) as claimed in claim 5 or 6, **characterized in that** said rib (9) has a substantially helical profile.

8. A device (1) as claimed in any of claims 5 to 7, **characterized in that** said rib (9) has a radial extent that is substantially dimensionally equal to a width of said flange (104) to engage said flange (104) and impart a rotation to said capsule (100).

9. A device as claimed in any of the preceding claims, **characterized in that** it comprises stirring means (10) located inside said reservoir (2), for mixing capsules (100) in said reservoir (2).

10. A device (1) as claimed in the preceding claim, **characterized in that** said stirring means (10) comprise at least one wheel (11, 12) having an outside perimeter (11a, 12a), a plurality of teeth (13) being arranged along said outside perimeter (11a, 12a).

11. A device (1) as claimed in claim 9 or 10, **characterized in that** said stirring means (10) comprise a pushing member (17) which is configured to impart an impulsive motion to said capsules (100).

12. A device (1) as claimed in any of the preceding claims, **characterized in that** it comprises a conduit (14) along which said capsules (100) move, which communicates with said reservoir (2) through said opening (3).

13. A device (1) as claimed in the preceding claim, **characterized in that** it comprises a pair of counter-rotating augers (18) for pushing said capsules (100) along the conduit (14).

## Patentansprüche

1. Vorrichtung (1) zum Ausrichten von Infusionskapseln (100), umfassend ein Reservoir (2) für Infusionskapseln (100), wobei das Reservoir (2) eine Austrittsöffnung (3) für die Kapseln (100) aufweist; das Reservoir (2) eine Bodenwand (4) aufweist, die zumindest teilweise zur Öffnung (3) hin geneigt ist; die Öffnung (3) konfiguriert ist, um das Austreten der Kapseln (100) in eine oder mehreren vorbestimmten Ausrichtungen zu ermöglichen, **dadurch gekennzeichnet, dass** die Vorrichtung (1) ferner Folgendes umfasst: eine Welle (5), die zumindest teilweise in dem Reservoir (2) eingeführt ist und eine Seitenfläche (5a) aufweist;
Antriebsmittel (7) zum Antreiben der Welle (5), um die Welle (5) um eine Drehachse (R) derselben in Drehung zu versetzen; ein Interferenzelement (6), das sich auf der Seitenfläche (5a) befindet und aus der Seitenfläche (5a) herausragt, so dass es durch die Welle (5) bewegt werden kann und eine Interferenz mit einem Flansch (104) einer Kapsel (100) herstellt, um die Kapsel (100) zu drehen; eine der Welle (5) gegenüberliegenden und der Welle (5) zugeordneten Anliegewand (26), um an einem Boden (102) oder einem Deckel (105) der Kapsel (100) anzuliegen, damit die Kapsel (100) in eine oder mehreren vorbestimmten Ausrichtungen eingerastet wird.

2. Vorrichtung (1) wie im vorhergehenden Anspruch beansprucht, **dadurch gekennzeichnet, dass** das Interferenzelement (6) dazu konfiguriert ist, eine Interferenz mit einem Flansch (104) der Kapsel (100) herzustellen, um die Kapsel (100) zu drehen und einen Boden (102) oder einen Deckel (105) der Kapsel zum Anliegen gegen die Anliegewand (26) zu bringen, um dadurch die Kapsel in eine oder mehreren vorbestimmten Ausrichtungen zu verriegeln.

3. Vorrichtung (1) wie in irgendeinem der vorhergehenden Ansprüche beansprucht, **dadurch gekennzeichnet, dass** die Anliegewand (26) einen Mindestabstand von dem Interferenzelement (6) aufweist, der größer als eine Höhe der Kapseln (100) und kleiner als eine Breite der Kapseln (100) ist.

4. Vorrichtung (1) wie in irgendeinem der vorhergehenden Ansprüche beansprucht, **dadurch gekennzeichnet, dass** die Öffnung (3) eine Breite aufweist, die im Wesentlichen gleich einer Höhe der Kapseln (100) ist, um die Passage der Kapseln (100) in eine oder mehreren Ausrichtungen, die der Flansch (104) einnimmt, im Wesentlichen vertikal und senkrecht zu einer kurzen Seite der Öffnung (3) zu ermöglichen

5. Vorrichtung (1) wie in irgendeinem der vorhergehenden Ansprüche beansprucht, **dadurch gekennzeichnet, dass** das Interferenzelement (6) eine Rippe (9) umfasst, die sich parallel zur Drehachse (R) der Welle (5) erstreckt.

6. Vorrichtung (1) wie im vorhergehenden Anspruch beansprucht, **dadurch gekennzeichnet, dass** die Rippe (9) sich im Wesentlichen entlang des gesamten Abschnitts der Welle (5) erstreckt, die in dem Reservoir (2) eingesetzt ist.

7. Vorrichtung (1) wie im Anspruch 5 oder 6 beansprucht, **dadurch gekennzeichnet, dass** die Rippe (9) ein im Wesentlichen spiralförmiges Profil aufweist.

8. Vorrichtung (1) wie in irgendeinem der Ansprüche von 5 bis 7 beansprucht, **dadurch gekennzeichnet, dass** die Rippe (9) eine radiale Ausdehnung aufweist, die bezüglich der Abmessung im Wesentlichen gleich einer Breite des Flansches (104) ist, um in den Flansch (104) einzugreifen und der Kapsel (100) eine Drehung zu verleihen.

9. Vorrichtung wie in irgendeinem der vorhergehenden Ansprüche beansprucht, **dadurch gekennzeichnet, dass** sie Rührmittel (10) umfasst, die sich innerhalb des Reservoirs (2) befinden, um die Kapseln (100) in dem Reservoir (2) zu mischen.

10. Vorrichtung (1) wie im vorhergehenden Anspruch beansprucht, **dadurch gekennzeichnet, dass** die Rührmittel (10) mindestens ein Rad (11, 12) aufweisend einen Außenumfang (11a, 12a) umfassen, wobei eine Vielzahl von Zähnen (13) entlang des Außenumfangs (11a, 12a) angeordnet sind.

11. Vorrichtung (1) wie im Anspruch 9 oder 10 beansprucht, **dadurch gekennzeichnet, dass** die Rührmittel (10) ein Schubelement (17) umfassen, das konfiguriert ist, um den Kapseln (100) eine impulsive Bewegung zu verleihen.

12. Vorrichtung (1) wie in irgendeinem der vorhergehenden Ansprüche beansprucht, **dadurch gekennzeichnet, dass** sie eine Leitung (14), entlang der sich die Kapseln (100) bewegen, umfasst, die mit dem Reservoir (2) durch die Öffnung (3) in Verbindung steht

13. Vorrichtung (1) wie im vorhergehenden Anspruch beansprucht, **dadurch gekennzeichnet, dass** sie ein Paar gegenläufige Schnecken (18) zum Schieben der Kapseln (100) entlang der Leitung (14) umfasst.

## Revendications

1. Dispositif (1) pour orienter des capsules d'infusion (100) comprenant un réservoir (2) pour des capsules d'infusion (100), ledit réservoir (2) ayant une ouverture de sortie (3) pour lesdites capsules (100), ledit réservoir (2) ayant une paroi de fond (4) au moins partiellement inclinée vers ladite ouverture (3), ladite ouverture (3) étant configurée pour permettre auxdites capsules (100) de sortir dans une ou plusieurs orientations prédéterminées ; **caractérisé en ce que** ledit dispositif (1) comprend en outre un arbre (5), au moins partiellement inséré dans ledit réservoir (2) et ayant une surface latérale (5a) ;
des moyens d'entraînement (7) pour entraîner ledit arbre (5), pour mettre en rotation ledit arbre (5) autour d'un axe de rotation (R) de celui-ci ; un élément d'interférence (6) situé sur ladite surface latérale (5a) et saillant hors de ladite surface latérale (5a) pour être déplacé par ledit arbre (5) et créer une interférence avec une bride (104) d'une capsule (100) pour faire tourner ladite capsule (100) ; une paroi de butée (26) opposée audit arbre (5) et associée audit arbre (5) pour buter contre une base (102) ou un couvercle (105) de ladite capsule (100) afin de verrouiller ladite capsule (100) dans une ou plusieurs orientations prédéterminées.

2. Dispositif (1) selon la revendication précédente, **caractérisé en ce que** ledit élément d'interférence (6) est configuré pour créer une interférence avec une bride (104) de ladite capsule (100) pour faire tourner ladite capsule (100) et mettre en butée une base (102) ou un couvercle (105) de ladite capsule contre ladite paroi de butée (26), afin de verrouiller ladite capsule dans une ou plusieurs orientations prédéterminées.

3. Dispositif (1) selon l'une quelconque des revendications précédentes, **caractérisé en ce que** ladite paroi de butée (26) présente une distance minimale dudit élément d'interférence (6) qui est supérieure à une hauteur desdites capsules (100) et inférieure à une largeur desdites capsules (100).

4. Dispositif (1) selon l'une quelconque des revendications précédentes, **caractérisé en ce que** ladite ouverture (3) présente une largeur sensiblement égale à une hauteur desdites capsules (100) pour permettre auxdites capsules (100) de passer dans une ou plusieurs orientations prises par ladite bride (104), de façon sensiblement verticale et perpendiculaire à un petit côté de ladite ouverture (3).

5. Dispositif (1) selon l'une quelconque des revendications précédentes, **caractérisé en ce que** ledit élément d'interférence (6) comprend une nervure (9) qui s'étend parallèlement à l'axe de rotation (R) dudit arbre (5).

6. Dispositif (1) selon la revendication précédente, **caractérisé en ce que** ladite nervure (9) s'étend sensiblement le long de la totalité de la partie dudit arbre (5) qui est insérée dans ledit réservoir (2).

7. Dispositif (1) selon la revendication 5 ou 6, **caractérisé en ce que** ladite nervure (9) présente un profil sensiblement hélicoïdal.

8. Dispositif (1) selon l'une quelconque des revendications 5 à 7, **caractérisé en ce que** ladite nervure (9) présente une extension radiale de dimension sensiblement égale à une largeur de ladite bride (104) pour engager ladite bride (104) et transmettre une rotation à ladite capsule (100).

9. Dispositif selon l'une quelconque des revendications précédentes, **caractérisé en ce qu'**il comprend des moyens d'agitation (10) situés à l'intérieur dudit réservoir (2), pour mélanger des capsules (100) dans ledit réservoir (2).

10. Dispositif (1) selon la revendication précédente, **caractérisé en ce que** lesdits moyens d'agitation (10) comprennent au moins une roue (11, 12) ayant un périmètre extérieur (11a, 12a), une pluralité de dents (13) étant disposées le long dudit périmètre extérieur (11a, 12a).

11. Dispositif (1) selon la revendication 9 ou 10, **caractérisé en ce que** lesdits moyens d'agitation (10) comprennent un élément de poussée (17) qui est configuré pour transmettre un mouvement impulsif auxdites capsules (100).

12. Dispositif (1) selon l'une quelconque des revendications précédentes, **caractérisé en ce qu'**il comprend un conduit (14) le long duquel lesdites capsules (100) se déplacent, qui communique avec ledit réservoir (2) à travers ladite ouverture (3).

13. Dispositif (1) selon les revendications précédentes, **caractérisé en ce qu'**il comprend une paire de vis sans fin contrarotatives (18) pour pousser lesdites capsules (100) le long du conduit (14).
